# EUROPÄISCHE PATENTANMELDUNG

(11) **EP 2 163 373 A2**
(43) Veröffentlichungstag der Anmeldung: **17.03.2010**
(21) Anmeldenummer: 09169756.5
(22) Anmeldetag: 08.09.2009
(51) Int. Cl.: B29C 65/16, B60R 21/215

(54) **Airbagabdeckung mit Schusskanal sowie Verfahren und Vorrichtung zur Herstellung einer solchen Airbagabdeckung**

(30) Priorität: 12.09.2008 DE 102008047676
(71) Anmelder: JENOPTIK Automatisierungstechnik GmbH, 07745 Jena (DE)
(72) Erfinder: Krug, Michael, 07747, Jena (DE); Griebel, Martin, 07743, Jena (DE); Zintl, Andreas, 99869, Wandersleben (DE)
(74) Vertreter: Schaller, Renate

(57) **Zusammenfassung**

Die Erfindung betrifft eine Airbagabdeckung mit Schusskanal, wobei die Airbagabdeckung (1) und der Schusskanal (2) spannungsfrei durch eine Schweißverbindung miteinander verbunden sind. Zur Herstellung der Schweißverbindung werden an einem Flansch (3) des Schusskanals (2) Schweißnoppen (4) ausgebildet, in einer Höhe größer der Toleranzbreite (+/- a) des Flansches (3), und während des Schweißens der Schusskanal (2) um einen Fügeweg größer der Toleranzbreite (+/- a) und kleiner der Höhe (h) der Schweißnoppen (4) auf die Airbagabdeckung (1) zu bewegt. Die Verschweißung der Schweißnoppen (4) mit der Airbagabdeckung (1) erfolgt simultan, indem auf jede Schweißnoppe ein Laserstrahlungsbündel gerichtet wird, wobei die Querschnitte der Laserstrahlungsbündel und der Schweißnoppen (4) aufeinander abgestimmt werden.

## Beschreibung

Airbagabdeckungen für einen Beifahrerairbag stellen in der Regel die komplette Instrumententafel eines Kraftfahrzeuges dar. Neben dem Verbergen einer im Beifahrerbereich hinter der Instrumententafel angeordneten Airbageinrichtung haben sie die Funktion, Bedien- und Anzeigeelemente zu tragen. Aufgrund ihrer in der Regel dünnwandigen, ausgedehnten Geometrie und Dimension sind Instrumententafeln nicht biege- und verwindungssteif. Sie erhalten ihre endgültige geometrische Stabilität erst durch die Montage mit der Fahrzeugkarosserie. Eine Instrumententafel kann auch mehrteilig ausgeführt werden. Mit der Verwendung des Begriffes Airbagabdeckung soll nachfolgend eine komplette Instrumententafel oder ein Teil einer Instrumententafel verstanden werden, hinter dem eine Airbageinrichtung angeordnet ist.

Die Montage eines Schusskanals auf der Rückseite einer Instrumententafel, durch den im Crashfall der sich ausdehnende Airbag örtlich definiert auf die Instrumententafel drückt, stellt insofern ein Problem dar, dass die entstehende Verbindung von der Frontseite der Instrumententafel nicht wahrnehmbar sein soll.

Bei einem Schusskanal handelt es sich um ein sehr biege- und verwindungssteifes Bauteil, welches im einfachsten Fall ein Rohrstück mit einem in der Regel rechteckförmigen Querschnitt darstellt und typischerweise einen umlaufenden Rand aufweist. Um seiner Funktion gerecht zu werden, muss der Schusskanal an vorgegebener Stelle, eine Sollbruchlinie in der Airbagabdeckung umschließend, sicher und langlebig mit der Instrumententafel verbunden werden.

Üblich ist es, Schusskanäle in der Massenproduktion im Spritzgussverfahren herzustellen.

Spritzgussteile unterliegen in der Regel verhältnismäßig großen Form- und Maßabweichungen. Für die Funktion der Schusskanäle sind diese Abweichungen zwar ohne Bedeutung, sie erschweren jedoch die Montage an einer Instrumententafel, da vermieden werden muss, dass die Formabweichungen der Montageflächen zu einer Formveränderung der Instrumententafel führen.

Aus der DE 202 20 612 U1 ist ein Airbagmodul bekannt, welches ein topfförmiges Gehäuse mit einem oberen Rand umfasst, auf dem eine im Wesentlichen flach ausgebildete Abdeckung mit ihrer Unterseite aufliegt. Die Abdeckung weist Sollbruchlinien auf, die durch den sich entfaltenden und aufblasenden Airbag geöffnet werden und den Airbag in Richtung eines Fahrzeuginsassen aus dem Gehäuse austreten lassen.
Zur Verbindung der Abdeckung mit dem Gehäuse sind die aneinanderliegenden Flächen, an der Unterseite der Abdeckung und dem oberen Rand des Gehäuses, miteinander verklebt oder verschweißt.
Die hier vorgegebene konstruktive Gestaltung lässt erwarten, dass sich Abweichungen der Randlage von ihrer Solllage infolge eines Verzuges des Gehäuses unmittelbar auf eine Verformung der Abdeckung auswirken, die schon allein aus ästhetischen Gründen unerwünscht ist.

So wie der vorliegenden Erfindung liegt der EP 1 062 128 B1 das Problem zugrunde, eine Instrumententafel (Abdeckung) mit einem Schusskanal so zu verbinden, ohne dass sich die entstehende Verbindung sichtseitig der Abdeckung bemerkbar macht.
Das Problem wird hier mit der Verwendung unterschiedlicher Werkstoffe aufgrund unterschiedlicher Anforderungen an die Materialeigenschaften der Instrumententafel und des Schusskanals begründet. Als Problemlösung sollen der Schusskanal, ein Scharnier und die Instrumententafel aus einem Thermoplast einheitlicher Polymerbasis, aber unterschiedlicher Flexibilisierung bestehen und durch Verschweißen miteinander verbunden werden. Als anwendbare Schweißverfahren werden das Ultraschall-, das Reib-, das Vibrations- und das Laserschweißen genannt. Es wird darauf hingewiesen, dass sich großflächige Verschweißungen, wie sie hier für die Verbindung des Scharniers einerseits mit der Instrumententafel und andererseits mit dem Schusskanal vorgesehen sind, optimieren lassen, wenn eine der zu verschweißenden Flächen eine Vielzahl von flächig verteilten Schweißstegen oder Schweißnoppen besitzt. Diese reduzieren einerseits die Größe der Schweißfläche auf ein schweißtechnisch beherrschbares Maß, z. B. beim Vibrationsschweißen, und ermöglichen andererseits dabei eine ganzflächige Verbindung.
Zum Schusskanal wird offenbart, dass es sich um ein hochfestes und steifes Bauteil handelt, dass mit Versteifungsrippen mechanisch verstärkt ist.

Gleich dem aus der vorgenannten DE 202 20 612 U1 bekannten Airbagmodul, sind auch hier keine Maßnahmen erkennbar, um zu vermeiden, dass ein Verzug des Schusskanals nicht auf die Instrumententafel projiziert wird, wenn beide Bauteile miteinander verschweißt werden.

In der DE 103 18 962 A1 ist eine mehrschalige Verkleidung für ein Airbaggehäuse gezeigt. Die Verkleidung soll geeignet sein, um sowohl von innen als auch von außen wirkende Kräfte aufnehmen zu können. Einschalige Verkleidungen könnten dieser Forderung nicht gerecht werden, da sie nachgiebig seien und sich leicht verformen.
Es wird vorgeschlagen, einen Innendeckel und einen Außendeckel über Schweißdome und Schweißrippen miteinander zu verschweißen. Die Schweißdome und Schweißrippen dienen dazu, den Abstand zwischen dem Innendeckel und dem Außendeckel zu überbrücken, der dadurch entsteht, dass diese beide nicht unmittelbar zur Anlage miteinander kommen, sondern nur mittelbar über wenigstens eine zwischengefügte Abdeckung, bevorzugt über ein ebenfalls zwischengefügtes Verstärkungselement.

Die Schweißdome und Schweißrippen sind demnach hier eine konstruktiv übliche Gestaltung der Schweißpartner, um einen durch dazwischenliegende Bauteile bestimmten Abstand zu überbrücken.

Der Erfindung liegt die Aufgabe zugrunde, eine Airbagabdeckung mit einem Schusskanal zu finden, bei der der Schusskanal, ohne dass er von der Frontseite der Airbagabdeckung wahrnehmbar ist, sicher an deren Rückseite befestigt ist.

Darüber hinaus soll die Erfindung ein Verfahren zur Herstellung einer mit einem Schusskanal verschweißten Airbagabdeckung und eine dazu geeignete Vorrichtung schaffen.

Die erfindungsgemäße Aufgabe wird für eine Airbagabdeckung mit Schusskanal gemäß Anspruch 1, für ein erfindungsgemäßes Verfahren gemäß Anspruch 12 und für eine erfindungsgemäße Vorrichtung gemäß Anspruch 5 gelöst.
Vorteilhafte Ausführungen sind in den jeweils rückbezogenen Unteransprüchen angegeben.

Als eine dauerhafte Verbindung zwischen zwei Kunststoffteilen, wie sie für eine Airbagabdeckung bzw. deren Trägerschicht und ein Schusskanal im Stand der Technik bevorzugt sind, bieten sich die Schweißverfahren als eine grundsätzlich geeignete Technologie an. Will man eine dynamische Belastung der Schweißpartner während des Schweißvorganges vermeiden, was aufgrund der in die Airbagabdeckung integrierten Sollbruchlinie erforderlich ist, müssen das Reib-, das Vibrations- und das Ultraschallschweißen als weniger geeignet ausgeschlossen werden. Es bleibt das Laserschweißen.

Es ist dem Fachmann bekannt, dass zwei Kunststoffteile durch Laserschweißen verbunden werden können, wenn für die zum Schweißen verwendete Laserstrahlung wenigstens im Schweißbereich der eine Schweißpartner transparent und der andere absorbierend ist. Die Laserstrahlung wird auf den transparenten Schweißpartner gerichtet, tritt durch diesen hindurch auf den absorbierenden Partner und erwärmt diesen. Über den Flächenkontakt mit dem transparenten Schweißpartner wird die sich entwickelnde Wärme in den transparenten Fügepartner geleitet, sodass letztendlich beide Schweißpartner in der Kontaktzone (Schweißzone) aufgeschmolzen werden und eine gemeinsame Schmelze bilden.

Um eine erfindungsgemäße Airbagabdeckung mit Schusskanal durch Laserschweißen herzustellen, ist am Schusskanal ein über den Umfang hinausragender umlaufender Flansch ausgebildet. Wenigstens im Bereich dieses Flansches ist das Material des Schusskanals transparent, währenddessen die Airbagabdeckung wenigstens auf ihrer Rückseite für die Laserstrahlung absorbierend ist, oder das Material des Schusskanals ist wenigstens im Bereich des Flansches absorbierend, während die Airbagabdeckung transparent ist.

Es ist erfindungswesentlich, dass auf der der Airbagabdeckung zugewandten Oberfläche, der freien Stirnfläche des Flansches voneinander beabstandete Schweißnoppen ausgebildet sind, die in ihrer Form und Größe mit dem jeweils auf sie projizierten Strahlquerschnitt von Laserstrahlungsbündeln abgestimmt sind und die eine Höhe größer der Toleranzbreite der Form- und Lageabweichung des Flansches aufweisen.

Je genauer der Schusskanal gefertigt ist, das heißt je geringer die Toleranzbreite ist, desto geringer kann die Höhe der Schweißnoppen gewählt werden und desto kürzer ist die Schweißdauer, bei ansonsten gleichen Prozessparametern.

Natürlich kann das Schweißen auch durchgeführt werden mit Schweißnoppen der Höhe Null, also quasi ohne Schweißnoppen, jedoch entsteht hier niemals eine hundertprozentig spannungsfreie Schweißverbindung, womit die Aufgabe der Erfindung nicht erfüllt wäre.

Vorteilhaft ist das transparente Material transluzent, d. h. es streut die transmittierende Laserstrahlung im Materialvolumen, wenigstens jedoch an seiner Austrittsfläche. Dadurch ist die Energiedichte der auf das absorbierende Material auftreffenden Strahlung geringer, solange ein Spalt zwischen den Schweißpartnern vorhanden ist, wodurch eine lokale Überhitzung des absorbierenden Schweißpartners vermieden wird.

Für das erfindungsgemäße Verfahren ist es wesentlich, dass Laserstrahlungsbündel gebildet werden in einer gleichen Anzahl wie Schweißnoppen am Flansch des Schusskanals vorhanden sind, die jeweils durch eine Schweißnoppe verlaufen.
Dabei können die Laserstrahlungsbündel jeweils durch eine Laserstrahlungsquelle gebildet werden oder mehrere Laserstrahlungsbündel entstehen durch Strahlteilung der von einer Laserstrahlungsquelle emittierten Strahlung. Die Anzahl der Strahlungsquellen entspricht dann vorteilhaft einem ganzzahligen Teiler der Anzahl der Schweißnoppen, um bei gleicher Laserleistung der Laserstrahlungsquellen die Schweißnoppen mit einer gleichen Strahlungsenergie zu beaufschlagen. Vorteilhaft ist insbesondere die hälftige Strahlteilung.
Der Schusskanal und die Airbagabdeckung werden über die einzelnen Schweißnoppen simultan verschweißt. Es entsteht eine Schweißverbindung aus Schweißlinsen, die unterschiedlich groß sein können.

Zwar könnten auch mehrere Schweißnoppen mit jeweils einem Laserstrahlungsbündel bestrahlt werden, jedoch würde damit ein großer Teil der Strahlungsenergie dem Schweißen nicht zur Verfügung stehen, da auch Bereiche der Airbagabdeckung beaufschlagt werden, die nicht in den Kontakt mit einer Schweißnoppe kommen. Eine solche Ausführung würde zwar die Erfindungsidee nutzen, wäre jedoch eine verschlechterte Ausführung.

Zu Beginn des Verfahrens steht wenigstens eine Schweißnoppe mit der Airbagabdeckung im Flächenkontakt, während andere einen Abstand zur Airbagabdeckung aufweisen können, der maximal der Toleranzbreite entspricht. Während des Verfahrens wird der Schusskanal um einen Fügeweg, größer der maximalen Toleranzbreite, auf die Airbagabdeckung zu bewegt, sodass am Ende des Fügeweges alle Schweißnoppen angeschmolzen zur Anlage an die Airbagabdeckung gekommen sind.
Über die Anpassung der Schweißnoppenform und -größe mit dem auftreffenden Querschnitt der Laserstrahlung wird die Laserenergie optimal in die Schweißpartner eingekoppelt. Das heißt die gesamte Strahlungsenergie eines Laserstrahlungsbündels wird in jeweils eine Schweißnoppe über deren gesamten Querschnitt verteilt eingekoppelt.

Der Abstand zwischen den Schweißnoppen ist mindestens so groß gewählt, dass seitens der der Airbagabdeckung abgewandten Seite des Flansches Versteifungsrippen in den Abstandsbereich münden können und nicht zu einer Abschattung der Laserstrahlungsbündel führen.

Der Abstand ist auch mindestens so groß gewählt, dass die entstehende Schmelze in diese Abstandsbereiche ausweichen kann.

Der maximale Abstand ist bestimmt durch die Mindestanzahl von Schweißnoppen, die für die Anzahl der entstehenden Schweißlinsen und damit neben der Größe der Schweißlinsen für die Festigkeit der Verbindung bestimmend sind.

Insbesondere die wesentlichen Merkmale einer erfindungsgemäßen Vorrichtung sollen nachfolgend anhand der Beschreibung der Ausführungsbeispiele erläutert werden.

### Hierzu zeigen die Zeichnungen:

- Fig. 1a: eine Prinzipskizze einer Airbagabdeckung und eines Schusskanals
- Fig. 1b: eine Prinzipskizze einer Airbagabdeckung mit Schusskanal
- Fig. 2a: eine erste Ausführung eines Schusskanals
- Fig. 2b: eine zweite Ausführung eines Schusskanals
- Fig. 3: eine Airbagabdeckung mit Schusskanal und Andruckkörper
- Fig. 4: eine erste Ausführung einer Vorrichtung
- Fig. 5: eine zweite Ausführung einer Vorrichtung
- Fig. 6: eine Teildarstellung einer Vorrichtung nach Fig. 5
- Fig. 7: eine Vorrichtung nach Fig. 5 in einer Bearbeitungskabine integriert

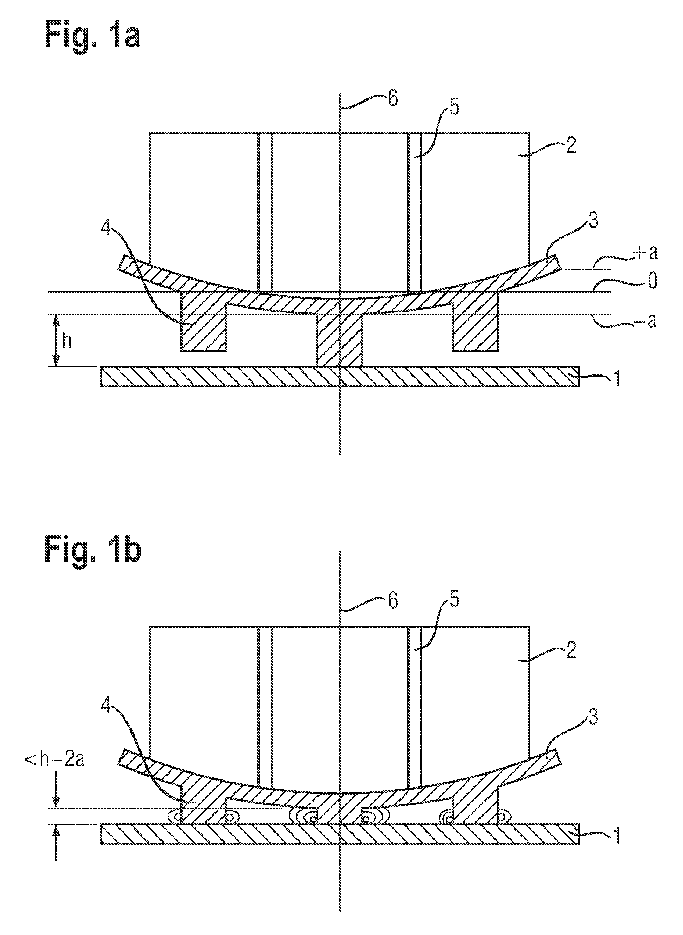

Die Fig. 1a und 1b zeigen eine Airbagabdeckung 1 und einen Schusskanal 2 in der Ausgangsposition (Fig. 1a) und der Endposition (Fig. 1b) des Schweißvorganges, der einen wesentlichen Verfahrensschritt eines erfindungsgemäßen Verfahrens darstellt.

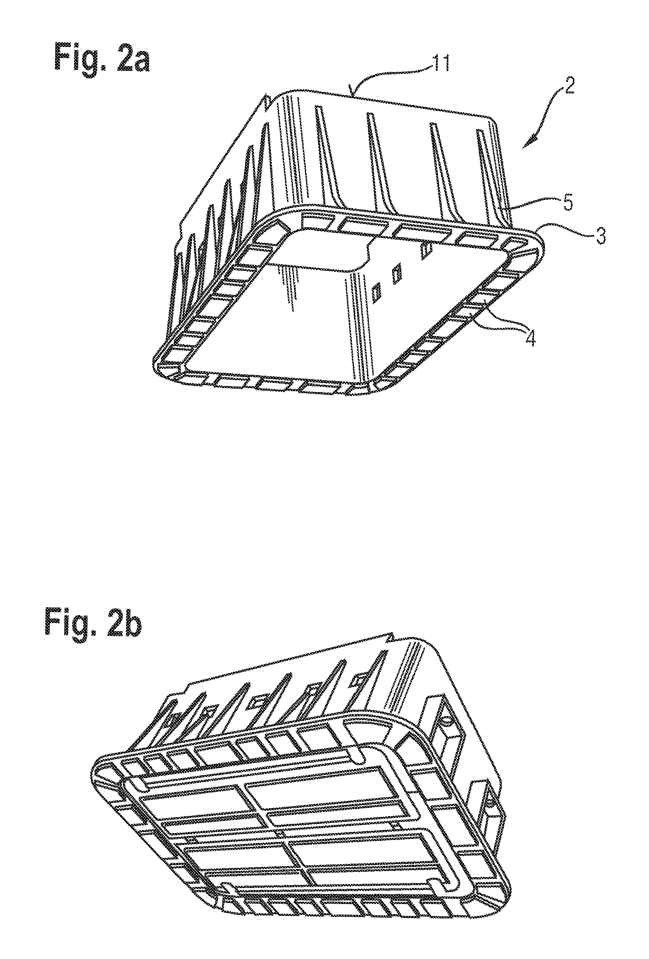

Die Dimensionierung, insbesondere des Schusskanals (2) und dessen Verzugs, d. h. dessen Toleranzabweichungen, wurde zur besseren Problemdarstellung in den Fig. 1a und 1b gegenüber den realen Verhältnissen, wie sie beispielsweise aus Fig. 2a zu entnehmen sind, unwirklich dargestellt.

Grundsätzlich ist ein Schusskanal 2 im Sinne der Erfindung ein Rohrstück, an dessen einem Ende ein Flansch 3 mit Schweißnoppen 4 ausgebildet ist. Dieser Flansch 3 schließt mit der inneren Umfangsfläche des Rohrstückes des Schusskanals 2 ab, um die Ausdehnung des Airbags durch die Rohröffnung nicht zu behindern. Nach außen hin ragt der Flansch 3 deutlich über die äußere Umfangsfläche des Rohrstückes des Schusskanals 2 hinaus. Über diesen hinausragenden Randbereich des Flansches 3 sind auf der freien Stirnseite des Flansches 3 die Schweißnoppen 4 ausgebildet. Am äußeren Umfang ausgebildete Versteifungsrippen 5 münden jeweils in den Bereichen in den Flansch 3, in denen auf der gegenüberliegenden freien Stirnseite des Flansches 3 keine Schweißnoppen 4 vorhanden sind.
Die beiden in den Fig. 2a und 2b gezeigten Ausführungen von Schusskanälen 2 zeigen rechteckförmige Schweißnoppen 4, deren Querschnitt vorteilhaft ist, wenn als Laserstrahlquellen Laserdioden 12 verwendet werden. Laserdioden strahlen in zwei zueinander senkrechten Achsrichtungen (low-axis und fast-axis) in einem unterschiedlichen Winkel, sodass die Laserstrahlungsbündel über eine Aufweitungsoptik lediglich in der Größe an den Querschnitt der Schweißnoppen 4 angepasst werden müssen. Ein rechteckiger Querschnitt hat gegenüber einem runden Querschnitt, der ebenfalls für die Schweißnoppen 4 sinnvoll ist, den Vorteil, dass eine größere Schweißfläche bei gleicher Breite des Randbereiches erreicht wird.

Da der Schusskanal 2 vorteilhaft im Spritzgussverfahren hergestellt wird, ist er in der Regel aus einem Material hergestellt. Dieses ist für die zum Schweißen vorgesehene Laserstrahlung transparent. Vorteilhaft wird ein semikristalliner Kunststoff, wie Polypropylen (PP), Polyäthylen (PE) oder Polyamid (PA) verwendet. Diese Materialien streuen in ihrem Volumen und an ihrer Strahlaustrittsfläche die Strahlung und werden genauer als transluzente Materialien, eine Untergruppe von transparenten Materialien, bezeichnet.
Die Dimensionierung der Höhe und der Abstände erfolgt in Abhängigkeit von der zulässigen Toleranz, um die der Flansch 3 der Airbagabdeckung 1 verzogen sein darf.

Bei einem zulässigen Verzug des Flansches 3 (Toleranzbreite) um +/- a , beispielsweise +/- 0,3 mm, können Punkte auf der freien Stirnseite des Flansches 3 in Richtung des Lotes 6 zur Solloberfläche, die in Fig. 1a durch eine Strichlinie dargestellt und mit "0" gekennzeichnet ist, um +/- 0,3 mm bzw. zueinander um einen Toleranzbetrag 2a von 0,6 mm abweichen. Um diese maximale Abweichung auszugleichen, ist die Höhe h der Schweißnoppen 4 größer als der Toleranzbetrag 2a. Die Abstände zwischen den Schweißnoppen 4 sind so groß gewählt, dass diese Bereiche die entstehende Schmelze aufnehmen können.
Nach dem Verschweißen weichen die Höhen h der ursprünglich gleich hohen Schweißnoppen 4 voneinander ab, und zwar um Höhendifferenzen, wie sie der Toleranzabweichung des Flansches 3 am jeweiligen Ort eines Schweißnoppen 4 entsprechen.

Eine zweite Ausführung eines Schusskanals 2 ist in Fig. 2b gezeigt. Sie unterscheidet sich zur ersten Ausführungsform durch zwei zusätzliche Fangklappen, die jeweils über zwei Scharniere mit dem Rohrstück verbunden sind und auf ihrer Oberfläche ausgebildete Schweißrippen aufweisen. Diese Fangklappen weisen in Richtung der Andruckkraft im Vergleich zum Flansch 3 eine nur sehr geringe Biegesteifigkeit auf, weshalb es hier nicht darum geht, beim Schweißen Toleranzen auszugleichen.

Die Materialeigenschaften für die beiden Schweißpartner bezüglich der Transmission oder Absorption der Laserstrahlung können auch umgekehrt sein.

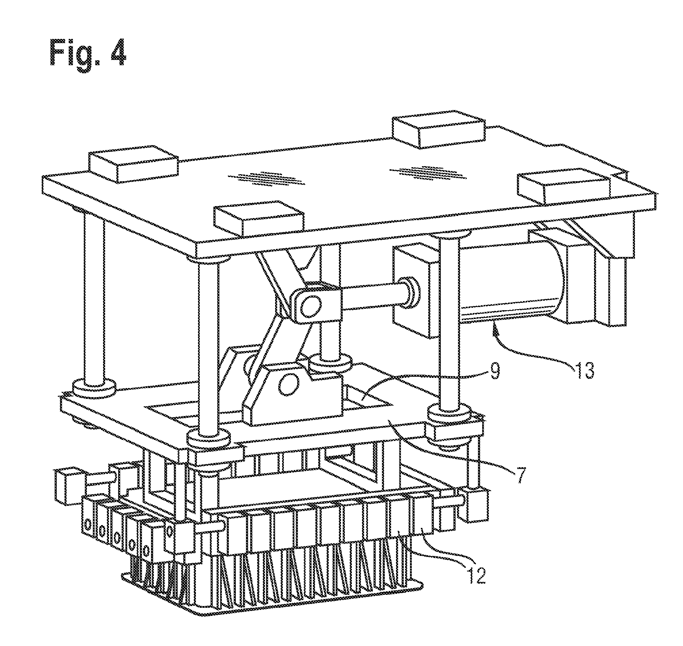

Eine erste Ausführung einer erfindungsgemäßen Vorrichtung ist mit ihren wesentlichen Merkmalen in Fig. 4 dargestellt.

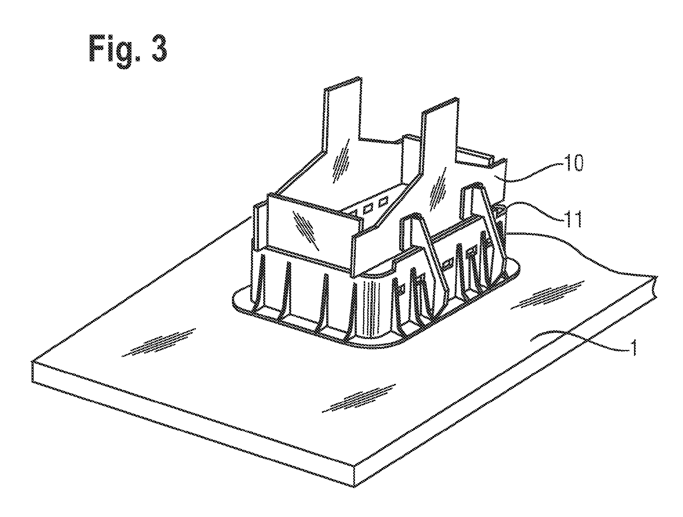

Die Vorrichtung besteht im Wesentlichen aus einer horizontal ausgerichteten Basisplatte 7, die in einer vorgegebenen Relativlage zu einer hier nicht dargestellten Aufnahmeeinrichtung 8, für eine ebenfalls hier nicht dargestellte Airbagabdeckung 1, oberhalb dieser ortsfest angeordnet ist.
In dieser Basisplatte 7 ist eine Aussparung 9 vorgesehen, durch die nur in vertikaler Richtung zur Basisplatte 7 ein Andruckkörper 10, der in Fig. 3 gezeigt ist, mittels eines Antriebes 13 absenkbar und anhebbar ist.
Der Andruckkörper 10 dient zum einen zur definierten Aufnahme des Schusskanals 2, indem an ihm Rast- oder Klemmelemente vorgesehen sind, um den Schusskanal 2 in einer definierten Position an diesem zu befestigen. In dieser definierten Position liegt der Schusskanal 2 wenigstens an vier gleichmäßig auf der Stirnfläche 11 des Rohrstückes des Schusskanals 2 wirkenden Andruckflächen an, um zum anderen beim Absenken des Andruckkörpers 10 von der Ausgangsposition in die Endposition einen Druck auf den Schusskanal 2 auszuüben, der sich gleichmäßig auf die Schweißnoppen 4 verteilt.
Die Andruckflächen und Rast- bzw. Klemmelemente sind so am Andruckkörper 10 ausgebildet, dass sie in vertikaler Blickrichtung auf den Randbereich eines eingehängten Schusskanals 2 diesen nicht abschatten.

Ebenfalls in einer, zwar vorteilhaft verstellbaren, aber während des Verfahrens festen Lage zur Basisplatte 7, sind um den Bewegungsbereich des Andruckkörpers 10 eine Vielzahl von Laserdioden 12 mit Aufweitungsoptik angeordnet. In der Anzahl und Anordnung entsprechen sie der Anzahl und Anordnung von Schweißnoppen 4 am Schusskanal 2. Jede der Laserdioden 12 mit Aufweitungsoptik ist so auf eine der Schweißnoppen 4 gerichtet, dass deren Laserstrahlungsbündel mit einem Querschnitt auf eine Schweißnoppe 4 auftrifft, wie sie dem Querschnitt der Schweißnoppe 4 entspricht.

Zur Ansteuerung des Andruckkörpers 10 und der Laserdioden 12 werden die Signale wenigstens eines Abstandssensors verwendet, der ebenfalls in einer festen Lagebeziehung zur Basisplatte 7 vorhanden ist und in den Figuren nicht gezeigt ist.

Es ist dem Fachmann klar, dass neben den genannten erfindungswesentlichen Bauteilen eine Rechen- und Speichereinheit sowie Steuereinheiten vorhanden sind, die mit dem Antrieb 13 für den Andruckkörper 10, dem wenigstens einen Abstandssensor und den Laserdioden 12 signaltechnisch verbunden sind.

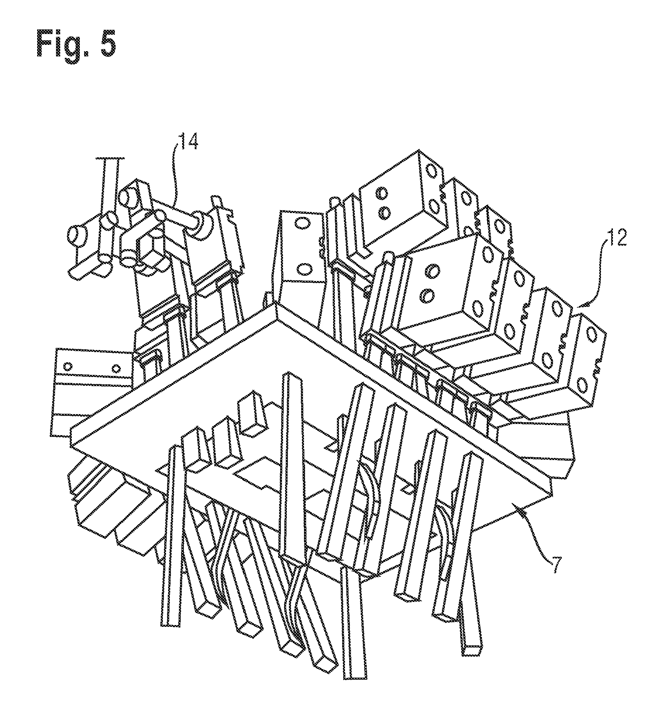

Im Unterschied zum ersten Ausführungsbeispiel einer erfindungsgemäßen Vorrichtung, bei dem die Laserdioden 12 unterhalb der Basisplatte 7 positioniert sind, sollen die Laserdioden 12 in einem zweiten Ausführungsbeispiel, gezeigt in Fig. 5, oberhalb der Basisplatte 7 angeordnet sein. Dies hat den Vorteil, dass die Basisplatte 7 nicht nur als mechanische Basis für die Vorrichtung dient, sondern auch eine Abschirmung darstellt, die die den Laserdioden 12 vorgeordneten Aufweitungsoptiken vor Verschmutzung durch den Schweißprozess schützt. Zu diesem Zweck muss die Basisplatte 7 nicht nur, wie zur Erfüllung ihrer mechanischen Aufgabe notwendig, eine hohe Biegesteifigkeit aufweisen, sondern auch für die Laserstrahlung transparent und möglichst optisch unwirksam sein.

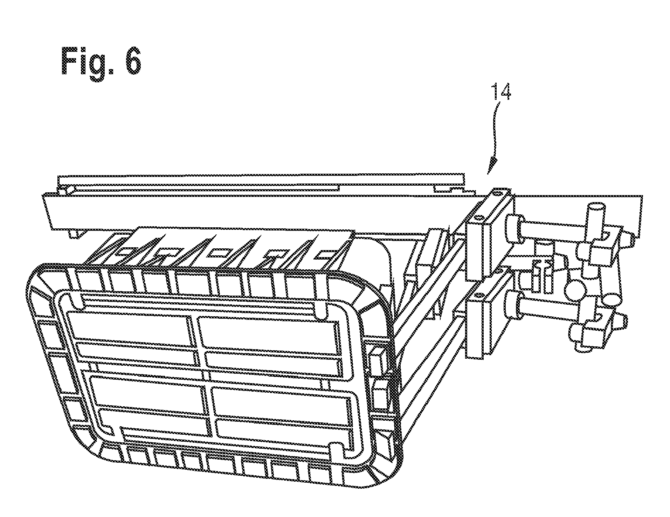

Als eine weitere Besonderheit gegenüber dem ersten Ausführungsbeispiel einer Vorrichtung weist diese zweite Ausführung einen Linearantrieb 14 auf, genauer gezeigt in Fig. 6, über den eine Auswahl von Laserdioden 12 über den Schusskanal 2 geführt werden kann, um Schweißrippen in einer zweiten Ausführung eines Schusskanals 2 mit Strahlung zu beaufschlagen. Das Verschweißen der Schweißrippen der Fangklappen ist im Unterschied zum Simultanschweißen der Schweißnoppen 4 ein Konturschweißen. Eine Gefahr, dass eventuelle Deformationen der Fangklappe auf die Airbagabdeckung 1 übertragen werden, ist aufgrund der geringen Biegesteifigkeit der Fangklappen nicht gegeben.

In einem dritten Ausführungsbeispiel soll die Vorrichtung zur Prozesskontrolle jeweils einer Schweißnoppe zugeordnete und mit der Steuer- und Recheneinheit verbundene thermische Sensoren, insbesondere Pyrometer aufweisen.

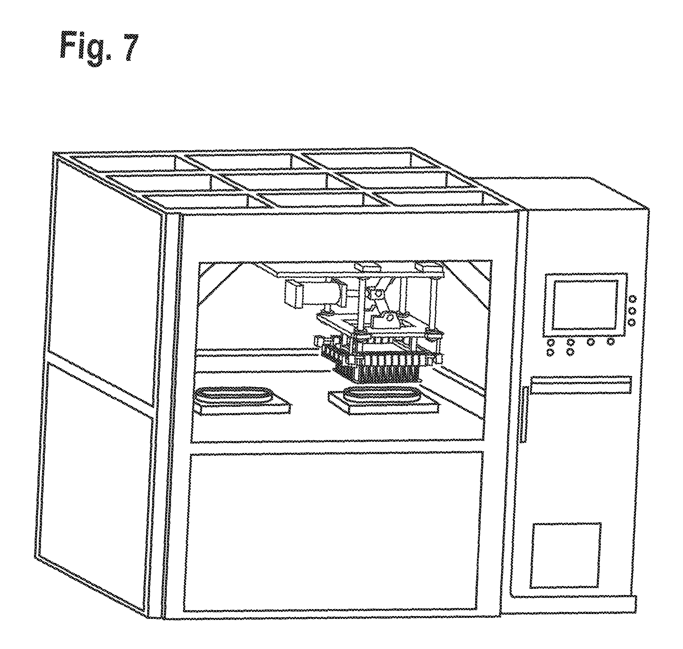

Vorteilhaft ist die Vorrichtung in einer Bearbeitungskabine, in zwei Bearbeitungspositionen verfahrbar, integriert, wie in Fig. 7 gezeigt. Die beiden Bearbeitungspositionen befinden sich jeweils oberhalb einer Aufnahmeeinrichtung 8, die sich **dadurch unterscheiden, dass** die eine für die Aufnahme einer Airbagabdeckung 1 für ein linksgelenktes Fahrzeug und die andere für die Aufnahme einer Airbagabdeckung 1 eines rechtsgelenkten Fahrzeuges gleichen Typs ausgebildet ist. Gegenüber der Anordnung von zwei Vorrichtungen entsteht insbesondere ein finanzieller Vorteil.

Zum Bestücken der Bearbeitungskabine mit einem Schusskanal 2 und einer Airbagabdeckung 1 sowie zur Entnahme der fertig verschweißten Airbagabdeckung mit Schusskanal wird ein hier nicht gezeigtes Schott geöffnet, um Zugriff in den Innenraum der Bearbeitungskabine zu bekommen. Die Vorrichtung erlaubt ein schnelles Handling der Teile.
Mit dem Anhängen des Schusskanals 2 an den Andruckkörper 10 wird der Schusskanal 2 in einer definierten Relativlage zu einer Aufnahmeeinrichtung 8 und damit zu der anschließend in die Aufnahmeeinrichtung 8 eingelegten Airbagabdeckung 1 positioniert. Ein nachträgliches Ausrichten zueinander entfällt. Nach Fertigstellung der Schweißverbindungen und Anheben des Andruckkörpers 10 hängt die Airbagabdeckung 1 mit dem Schusskanal 2 am Andruckkörper 10 und kann von diesem abgenommen werden.

Ein erfindungsgemäßes Verfahren umfasst die Herstellung oder das Vorhandensein eines Schusskanals 2, wie er in der Beschreibung der Ausführungsbeispiele für eine Airbagabdeckung mit Schusskanal beschrieben wurde, als eine Vorrausetzung, um einen Schusskanal 2 erfindungsgemäß mit einer Airbagabdeckung 1 zu verschweißen.

Die beiden zu verschweißenden Teile, die Airbagabdeckung 1 und der Schusskanal 2, werden zueinander positioniert, indem der Schusskanal 2 an einem Andruckkörper 10 befestigt und die Airbagabdeckung 1 in eine Aufnahmeeinrichtung 8 eingelegt wird.
Der Andruckkörper 10 wird mittels einem durch die Steuereinrichtung gesteuerten Antrieb 13 abgesenkt, bis der Schusskanal 2 auf der Airbagabdeckung 1 zur Anlage und somit in seine Ausgangsposition kommt.

Über wenigstens einen Abstandssensor wird der Abstand zwischen einem Fixpunkt zum Schusskanal 2 und der Oberfläche der Airbagabdeckung 1 erfasst und der Ausgangsposition zugeordnet abgespeichert. Bei mehreren Abstandssensoren wird aus den Abstandswerten ein Abstandsmittelwert gebildet und gespeichert.
Jetzt werden die Laserstrahlungsquellen, bevorzugt Laserdioden 12, eingeschaltet. Die Andruckvorrichtung wird weiter abgesenkt und der sich ändernde Abstand bzw. Abstandsmittelwert erfasst.
Aus dem jeweils temporären Abstand bzw. Abstandsmittelwert und dem für die Ausgangsposition abgespeicherten Abstand bzw. Abstandsmittelwert wird die Differenz gebildet und mit einem abgespeicherten Wert für einen vorgegebenen Fügeweg verglichen. Sobald die Differenz den Wert des Fügeweges überschreitet, werden die Laserdioden 12 ausgeschaltet. Der Schusskanal 2 befindet sich in seiner Endposition zur Airbagabdeckung 1.
Als Abschaltkriterium kann auch eine fest vorgegebene Zeitspanne verwendet werden. Der in dieser Zeitspanne erreichte Fügeweg wird dann ausgewertet.

Der Fügeweg ist durch die zulässige Bauteiltoleranz für den Schusskanal 2 vorgegeben, genauer gesagt ist er größer als der Toleranzbetrag 2a für den Verzug des Flansches 3 des Schusskanals 2.
Durch den vorgegebenen Fügeweg wird sichergestellt, dass jede einzelne Schweißnoppe mit der Airbagabdeckung 1 verschweißt wird und somit simultan eine sichere, aber spannungsfreie Schweißverbindung, gebildet durch einzelne Schweißlinsen, entsteht.

Vorteilhaft wird während des Schweißens die Temperatur der einzelnen Schweißnoppen 4 erfasst.
Solange sie nicht in Kontakt mit der Airbagabdeckung 1 kommen, also nicht durch Wärmeleitung erwärmt werden, steigt ihre Temperatur durch Wärmestrahlung von der Airbagabdeckung 1 nur unmerklich. Erst wenn es zum Kontakt kommt, kommt es auch zu einem rasanten Temperaturanstieg, der dann auch zum Schmelzen der Schweißnoppen 4, beginnend von deren freien Enden her, führt.

Die Temperaturüberwachung kann für eine Prozesskontrolle oder auch Prozessregelung vorteilhaft genutzt werden.

Für die Prozesskontrolle können die gemessenen Endwerte verwendet werden, um festzustellen, ob die betreffende Schweißnoppe überhaupt verschweißt wurde.
Es kann auch der erfasste Temperaturverlauf über die Schweißzeit abgespeichert werden, um durch Vergleich von Temperaturverläufen über eine Serie von verschweißten Airbagabdeckungen 1 die Stabilität der Prozessparameter zu belegen, was eine reproduzierbare Schweißqualität beweist.

Für die Prozessregelung können die erfassten Temperaturwerte permanent mit einem Schwellwert verglichen werden, um die Leistung aller oder einzelner Laserdioden 12 zu regeln. Damit kann ein lokales Überhitzen sicher vermieden werden.

Mit den bereits dargelegten Ausführungsbeispielen für eine Vorrichtung werden die Laserstrahlungsbündel auf einen Randbereich eines am Schusskanal 2 ausgebildeten Flansches 3 gerichtet, sodass jeweils ein Laserstrahlungsbündel durch eine dort ausgebildete Schweißnoppe geführt und auf die Airbagabdeckung 1 auftrifft. Dazu muss wenigstens der Randbereich für die Laserstrahlung transparent und die Airbagabdeckung 1 absorbierend sein.
Bei umgekehrten Materialeigenschaften ist zwar eine erfindungsgemäße Vorrichtung nicht geeignet, jedoch ist das Verfahren grundsätzlich auch durchführbar und eine gleiche erfindungsgemäße Airbagabdeckung mit Schusskanal herstellbar.

### Bezugszeichenliste

- 1: Airbagabdeckung
- 2: Schusskanal
- 3: Flansch
- 4: Schweißnoppen
- 5: Versteifungsrippen
- 6: Lot
- 7: Basisplatte
- 8: Aufnahmeeinrichtung
- 9: Aussparung
- 10: Andruckkörper
- 11: Stirnfläche des Rohrstückes
- 12: Laserdiode
- 13: Antrieb für Andruckkörper
- 14: Linearantrieb

- h: Höhe der Schweißnoppe
- +/- a: Toleranzbreite
- 2a: Toleranzbetrag

## Patentansprüche

1. Airbagabdeckung mit Schusskanal, wobei der Schusskanal (2) ein Rohrstück darstellt, an dessen einem Ende ein Flansch (3) ausgebildet ist, der nach außen hin deutlich über die äußere Umfangsfläche des Rohrstückes hinausragt, die freie Stirnseite des Flansches (3) mit der Airbagabdeckung (1) über eine Schweißverbindung verbunden ist und einer der beiden Schweißpartner für eine Laserstrahlung zum Schweißen transparent und der andere absorbierend ist, **dadurch gekennzeichnet,**
**dass** an der freien Stirnseite des Flansches (3) zueinander beabstandete Schweißnoppen (4) ausgebildet sind, die mit den anliegenden Bereichen der Airbagabdeckung (1) über ausgebildete Schweißlinsen die Schweißverbindung darstellen und die Schweißnoppen (4) Höhendifferenzen zueinander aufweisen, wie sie der Toleranzabweichung des Flansches (3) am jeweiligen Ort eines Schweißnoppen (4) entsprechen.

2. Airbagabdeckung mit Schusskanal nach Anspruch 1, **dadurch gekennzeichnet,**
**dass** die Schweißnoppen (4) einen rechteckförmigen Querschnitt aufweisen.

3. Airbagabdeckung mit Schusskanal nach Anspruch 1 oder 2, **dadurch gekennzeichnet,**
**dass** das Material des Schusskanals (2) tranzluzent ist.

4. Airbagabdeckung mit Schusskanal nach Anspruch 3, **dadurch gekennzeichnet,**
**dass** das Material des Schusskanals (2) ein semikristalliner Kunststoff ist.

5. Vorrichtung zum Verschweißen einer Airbagabdeckung (1) mit einem mit Schweißnoppen (4) versehenen Schusskanal (2),
mit einer horizontal ausgerichteten Basisplatte (7), die in einer vorgegebenen Relativlage zu einer Aufnahmeeinrichtung (8) für die Airbagabdeckung (1) oberhalb dieser ortsfest angeordnet ist,
mit einer Aussparung (9), die in der Basisplatte (7) vorgesehen ist und durch die hindurch ein Andruckkörper (10) zur Aufnahme und zum Andruck des Schusskanals (2) an die Airbageinrichtung mittels eines Antriebes (13) vertikal bewegbar ist,
sowie mit einer fest zur Basisplatte (7), um den Bewegungsbereich des Andruckkörpers (10) angeordneten Vielzahl von Laserstrahlungsquellen.

6. Vorrichtung nach Anspruch 5, **dadurch gekennzeichnet, dass** die Vielzahl von Laserstrahlungsquellen der Anzahl der Schweißnoppen (4) entspricht.

7. Vorrichtung nach Anspruch 5, **dadurch gekennzeichnet,**
**dass** die Vielzahl von Laserstrahlungsquellen einem ganzzahligen Teiler der Anzahl der Schweißnoppen (4) entspricht und den Laserstrahlungsquellen Strahlteiler vorgeordnet sind.

8. Vorrichtung nach Anspruch 5, **dadurch gekennzeichnet,**
**dass** die Vielzahl von Laserstrahlungsquellen Laserdioden (12) mit einer vorgeordneten Aufweitungsoptik sind.

9. Vorrichtung nach Anspruch 5 bis 7, **dadurch gekennzeichnet,**
**dass** die Vielzahl von Laserstrahlungsquellen oberhalb der Basisplatte (7) angeordnet ist und das Material der Basisplatte (7) für die Laserstrahlung transparent ist, wodurch die Laserstrahlungsquellen vor einer Verschmutzung beim Schweißen geschützt sind.

10. Vorrichtung nach einem der Ansprüche 5 bis 9, **dadurch gekennzeichnet,**
**dass** wenigstens ein Abstandssensor vorhanden ist.

11. Vorrichtung nach Anspruch 10, **dadurch gekennzeichnet,**
**dass** in gleicher Anzahl wie Schweißnoppen (4) thermische Sensoren vorhanden sind.

12. Verfahren zur Herstellung einer Airbagabdeckung mit Schusskanal mit folgenden Verfahrensschritten:
- Herstellen eines Schusskanals (2) bestehend aus einem Rohrstück, an dessen einem Ende ein Flansch (3) ausgebildet ist, der aus einem für eine Laserstrahlung transparenten Kunststoff besteht,
- Zusammenbringen des Schusskanals (2) und der Airbagabdeckung (1), sodass die freie Stirnseite des Flansches (3) in einer vorgegebenen Lage und Position mit der Airbagabdeckung (1) zur Anlage kommt, wobei die Airbagabdeckung (1) wenigstens im Bereich der Anlage aus einem laserabsorbierenden Material besteht,
- Richten einer Laserstrahlung auf den Flansch (3) und Verschweißen des Flansches (3) mit der Airbagabdeckung (1), **dadurch gekennzeichnet, dass** bei der Herstellung des Schusskanals (2) an der freien Seite des Flansches (3) Schweißnoppen (4) ausgebildet werden mit einer Höhe (h), die größer ist als die zulässige Toleranzabweichung des Flansches (3), dass die Laserstrahlung Laserstrahlungsbündel sind, die in einer gleichen Anzahl wie Schweißnoppen (4) ausgebildet werden, dass der Querschnitt der Laserstrahlungsbündel und der Querschnitt der Schweißnoppen (4) aufeinander abgestimmt werden und dass während des Richtens der Laserstrahlung auf den Flansch (3) der Schusskanal (2) über einen Fügeweg, der größer der zulässigen Toleranzabweichung und kleiner der Höhe (h) ist, auf die Airbagabdeckung (1) zu bewegt wird.

13. Verfahren nach Anspruch 12, **dadurch gekennzeichnet,**
**dass** die Bewegung des Flansches (3) zur Airbagabdeckung (1) über die Erfassung des Abstandes zwischen Flansch (3) und Airbagabdeckung (1) gesteuert wird.

14. Verfahren nach Anspruch 12 oder 13, **dadurch gekennzeichnet,**
**dass** die Temperatur der einzelnen Schweißnoppen (4) wenigstens am Ende des Schweißens erfasst wird und aus dieser abgeleitet wird, ob die einzelnen Schweißnoppen (4) mit der Airbagabdeckung (1) verschmolzen wurden.

15. Verfahren nach Anspruch 12 oder 13, **dadurch gekennzeichnet,**
**dass** der Temperaturverlauf der einzelnen Schweißnoppen (4) über die Dauer des Schweißens erfasst wird und die Laserleistung der die Laserstrahlungsbündel emittierenden Laserstrahlungsquellen geregelt wird.

16. Verfahren nach Anspruch 12 oder 13, **dadurch gekennzeichnet,**
**dass** der Temperaturverlauf der einzelnen Schweißnoppen (4) über die Dauer des Schweißens erfasst und abgespeichert wird und die abgespeicherten Temperaturverläufe für eine Serie von hergestellten Airbagabdeckungen mit Schusskanal untereinander vergleichen werden, wodurch eine Aussage über die Stabilität der Prozessparameter und die reproduzierbare Schweißqualität getroffen wird.
